(19) 

Europäisches Patentamt
European Patent Office
Office européen des brevets

(11) **EP 3 822 550 A1**

(12) **EUROPEAN PATENT APPLICATION**
published in accordance with Art. 153(4) EPC

(43) Date of publication:
**19.05.2021 Bulletin 2021/20**

(21) Application number: **18925900.5**

(22) Date of filing: **26.11.2018**

(51) Int Cl.:
**F24F 5/00** (2006.01)     **F03D 9/00** (2016.01)
**F03G 7/00** (2006.01)

(86) International application number:
**PCT/CN2018/117453**

(87) International publication number:
**WO 2020/010781 (16.01.2020 Gazette 2020/03)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **12.07.2018 CN 201810761252**

(71) Applicants:
• **Qingdao Haier Air-Conditioning Electronic Co., Ltd**
  **Qingdao, Shandong 266101 (CN)**
• **Haier Smart Home Co., Ltd.**
  **Qingdao, Shandong 266101 (CN)**

(72) Inventors:
• **CAO, Zhigao**
  **Qingdao, Shandong 266101 (CN)**
• **SUN, Chao**
  **Qingdao, Shandong 266101 (CN)**

• **AN, Chao**
  **Qingdao, Shandong 266101 (CN)**
• **GU, Chao**
  **Qingdao, Shandong 266101 (CN)**
• **LIU, Guanghui**
  **Qingdao, Shandong 266101 (CN)**
• **WANG, Jianying**
  **Qingdao, Shandong 266101 (CN)**
• **ZHANG, Xiangrong**
  **Qingdao, Shandong 266101 (CN)**
• **XIONG, Changyou**
  **Qingdao, Shandong 266101 (CN)**
• **YANG, Kun**
  **Qingdao, Shandong 266101 (CN)**
• **DU, Juan**
  **Qingdao, Shandong 266101 (CN)**

(74) Representative: **Ipside**
**7-9 Allées Haussmann**
**33300 Bordeaux Cedex (FR)**

(54) **WIND POWER DEVICE, AIR CONDITIONER, CONTROL METHOD AND COMPUTER-READABLE STORAGE MEDIUM**

(57)     A wind power device, comprising: an impeller (5), a generator (10), a power conversion circuit and a storage battery, wherein the impeller (5) is installed in front of an air outlet grid of an air conditioner outdoor unit and is connected to a rotating shaft of the generator (10); the power conversion circuit receives alternating current power outputted by the generator (10) and converts same into a battery charging voltage; and the storage battery stores direct current power outputted from the power conversion circuit. The air conditioner outdoor unit, after being started, runs an outdoor fan and forms forced convection with the impeller (5) of the wind power device, so as to convert the wind energy into electric energy and store same in the storage battery. When the air conditioner is in a standby state and a power-off state, the power stored in the storage battery may be used to continuously keep a signal receiving device and a component that needs to remain activated in an active state, and the power consumption of the air conditioner is zero in the standby or power-off state. The present invention also relates to an air conditioner, a control method and a computer-readable storage medium.

**(Cont. next page)**

EP 3 822 550 A1

*FIG. 1*

**Description**

**CROSS-REFERENCE TO RELATED APPLICATIONS**

The application is based upon and claims priority to Chinese Patent Application No. 201810761252.4, filed July 12, 2018, the entire contents of which are incorporated herein by reference.

**Technical Field**

The present disclosure relates to the field of energy saving technologies of air conditioners, and more particularly, to a wind power device, an air conditioner, a control method and a computer readable storage medium.

**Background of the Invention**

At present, energy saving requirements for air conditioners are getting higher and higher. When the air conditioner is in a standby or shutdown state, each component needs to be kept in an active state all the time, and thus power consumption is required. In order to reduce the power consumption of the air conditioner in the standby or shutdown state, a current solution is to reduce the number of components that need to be kept activated during the standby or shutdown state, and minimize the power in the standby or shutdown state. However, in order to ensure that the air conditioner can respond quickly after obtaining a power-on signal, some components of the air conditioner still need to be activated, and thus the power of the air conditioner in the standby or shutdown state is generally about 3 to 15W, and the larger the horsepower of the air conditioner, the higher the standby power.

$$\text{Standby power consumption} = \text{Standby power} \times \text{Standby time,}$$

$$\text{Shutdown power consumption} = \text{Shutdown power} \times \text{Shutdown time.}$$

Since the air conditioner has a long standby and shutdown time throughout the year, it is estimated that the standby time is 2142h and the shutdown time is 5088h, and the standby power consumption and the shutdown power consumption are still relatively high.
How to reduce the standby power consumption or the shutdown power consumption of the air conditioner is currently an urgent problem to be solved.

**Summary of the Invention**

Embodiments of the present disclosure provide a wind power device, an air conditioner, a control method and a computer readable storage medium, so as to reduce the power consumption of the air conditioner in the standby or shutdown state. In order to have a basic understanding of some aspects of the disclosed embodiments, a brief summary is given below. This summary is not a general comment, nor is it intended to identify key/important constituent elements or describe the scope of protection of these embodiments. The sole purpose thereof is to present some concepts in a simplified form as a preface to the following detailed description.
According to a first aspect of the embodiments of the present disclosure, there is provided a wind power device.
In some optional embodiments, the wind power device includes at least one impeller, a generator, a first power transformation circuit and a storage battery, wherein the at least one impeller is installed in front of an air outlet grid of an outer unit of an air conditioner and is connected to a rotating shaft of the generator; the first power transformation circuit receives alternating current electric energy output by the generator and converts the alternating current electric energy into a charging voltage of the storage battery; and the storage battery stores direct current electric energy output by the first power transformation circuit.
According to a second aspect of the embodiments of the present disclosure, there is provided an air conditioner.
In some optional embodiments, the air conditioner includes the wind power device described in any one of the foregoing optional embodiments, and further includes a signal receiving device configured to receive a control signal, wherein the signal receiving device is powered by the storage battery or a power grid, and a keeping activated component is also powered by the storage battery or the power grid when the air conditioner is in a standby or shutdown state.
According to a third aspect of the embodiments of the present disclosure, there is provided a method for controlling the air conditioner described in any one of the aforementioned optional embodiments.
In some optional embodiments, the method includes: when the standby or shutdown signal is received, detecting whether the remaining capacity of the storage battery is greater than or equal to the first threshold value; if the remaining capacity of the storage battery is greater than or equal to the first threshold value, controlling the switching circuit to select the storage battery to supply power to the signal receiving device and the keeping activated component, and controlling power supply of other components of the air conditioner to be disconnected; and if the remaining capacity of the storage battery is less than the first threshold value, controlling the switching circuit to select alternating current power supply on a side of the power grid to supply power to the signal receiving device and the keeping activated component, and controlling the power supply of other components of the air conditioner to be disconnected.

According to a fourth aspect of the embodiments of the present disclosure, there is provided a computer readable storage medium.

In some optional embodiments, the computer readable storage medium has a computer program stored thereon, when the computer program is executed by a processor, the method described in any one of the aforementioned optional embodiments is implemented.

Technical solutions provided by the embodiments of the present disclosure may include the following technical effects:

the power consumption of the air conditioner in the standby or shutdown state is electric energy stored in the storage battery after generating electricity by wind energy, and thus the standby power consumption is 0, which improves the energy efficiency grade of the air conditioner and reduces the power consumption of the air conditioner.

It should be understood that both the foregoing general description and the following detailed description are exemplary and explanatory only and are not intended to limit the present disclosure.

## Brief description of the Drawings

The accompanying drawings, which are incorporated in and constitute a part of this description, illustrate embodiments consistent with the present disclosure and, together with the description, serve to explain the principles of the present disclosure.

Fig. 1 is a schematic structural diagram illustrating a wind power device according to an optional embodiment.
Fig. 2 is a circuit block diagram illustrating a wind power device according to an optional embodiment.
Fig. 3 is a circuit block diagram illustrating an air conditioner according to an optional embodiment.
Fig. 4 is a circuit block diagram illustrating an air conditioner according to an optional embodiment.
Fig. 5 is a circuit block diagram illustrating an air conditioner according to an optional embodiment.
Fig. 6 is a schematic flowchart illustrating a control method according to an optional embodiment.

## Detailed Description of Embodiments

The following description and accompanying drawings fully illustrate the specific implementation solutions of the present disclosure, so that a person skilled in the art can practice them. Other embodiments may include structural, logical, electrical, procedural and other changes. The embodiments merely represent possible changes. Unless otherwise specified explicitly, the individual component and function are optional and the operation sequence may be changed. Parts and characteristics of some implementation solutions may be included in or replace parts and characteristics of other implementation solutions. The scope of the implementation solutions of the present disclosure includes the whole scope of the claims and all available equivalents of the claims. As used herein, each implementation solution may be independently or generally expressed by "present disclosure", which is merely for convenience. As a matter of fact, if more than one disclosure is disclosed, it does not mean that the scope of the application is automatically limited to any single disclosure or disclosure concept. As used herein, terms such as "first" and "second" are merely for distinguishing one entity or operation from another entity or operation and do not require or imply any actual relationship or sequence among these entities or operations. Moreover, terms such as "comprise" and "include" or any other variants indicate a non-exclusive inclusion, so that a process, method or device including a series of elements not only include these elements, but also include other elements not explicitly listed, or further include elements inherent to such a process, method or device. Without further restrictions, the element defined by the statement "includes a/an ..." does not exclude the existence of other identical elements in the process, method or device that includes the element. As used herein, each embodiment is described progressively, and contents focally described in each embodiment are different from those in other embodiments. The same or similar parts among each of the embodiments may be referred to each other. Regarding a structure, a product and the like disclosed in the embodiments, since they are corresponding to parts disclosed in the embodiments, their description is relatively simple and relevant contents can be referred to the description in the method part.

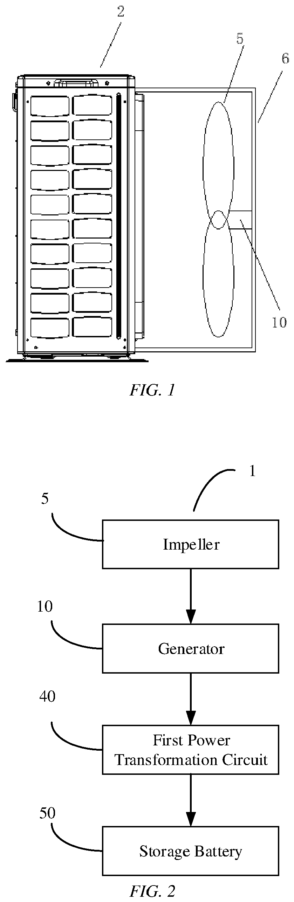

Fig. 1 shows a structure of a wind power device according to an optional embodiment.

In the optional embodiment, the wind power device includes at least one impeller 5, a generator 10, a first power transformation circuit and a storage battery. The at least one impeller 5 is installed in front of an air outlet grid of an outer unit of an air conditioner, and is used to absorb wind energy output by a fan. The outer unit of the air conditioner is further provided with an external net cover 6 having a receiving space for installing the at least one impeller 5 and the generator 10 and playing a protective role in preventing the at least one impeller 5 from harming surrounding people or objects during operation. The at least one impeller 5 is connected to a rotating shaft of the generator 10, and when the at least one impeller 5 rotates, the generator 10 outputs alternating current electric energy.

Optionally, a rotating shaft of the at least one impeller and a rotating shaft of a fan of the outer unit of the air conditioner are in the same horizontal line. According to this embodiment, it can be ensured that the at least one impeller can absorb as much wind energy output by the fan as possible.

Optionally, a diameter of the at least one impeller is less than or equal to that of the fan.

In another optional embodiment, the at least one impeller includes a plurality of impellers, and each impeller is arranged around the fan of the outer unit of the air conditioner. Since the wind energy output by the fan will be dispersed after being transmitted for a certain distance, the plurality of impellers are arranged around the fan to maximize the utilization of the wind energy output by the fan.

Optionally, each impeller corresponds to a generator, and output ends of a plurality of generators collect the output alternating current electric energy through a bus circuit.

Fig. 2 shows a control block diagram of a wind power device according to an optional embodiment.

In the optional embodiment, the wind power device 1 includes at least one impeller 5, a generator 10, a first power transformation circuit 40 and a storage battery 50. An input end of the first power transformation circuit 40 receives alternating current voltage output by the generator 10, and converts the alternating current voltage into a charging voltage of the storage battery, so as to charge the storage battery 50. The storage battery 50 stores direct current electric energy output by the first power transformation circuit 40.

Since the alternating current voltage output by the generator 10 has poor stability, and the charging voltage of the storage battery is a direct current voltage, the voltage output by the generator 10 is converted into a stable charging voltage of the storage battery through the first power transformation circuit. Optionally, the first power transformation circuit is an AC/DC converter.

Optionally, the storage battery has a voltage of 12V, and a capacity of 10A·h to 20A·h. Optionally, the storage battery is a lithium battery.

According to the above-mentioned optional embodiment, after the outer unit of the air conditioner is started, the fan runs to form forced convection with the at least one impeller of the wind power device, so that the wind energy can be converted into the electric energy and stored in the storage battery; when the air conditioner is in the standby or shutdown state, the power supply on the side of the power grid can be cut off, and the stored electric energy in the storage battery can be used to keep the signal receiving device and some components in the air conditioner always in the active state. The power consumption in the standby or shutdown state is the electric energy stored in the storage battery. Since the electric energy in the storage battery is converted by the wind energy, the standby or shutdown power consumption of the air conditioner is 0.

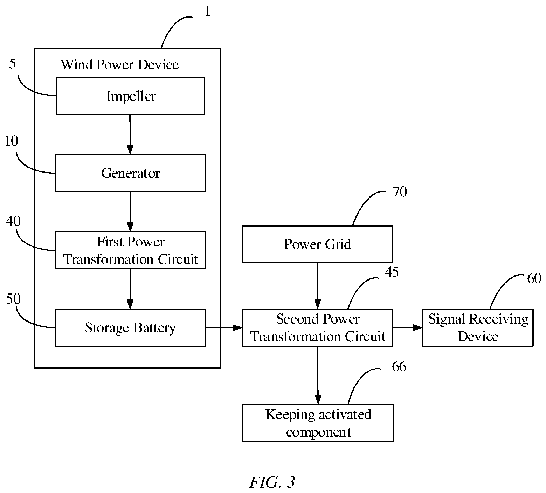

Fig. 3 shows an air conditioner according to an optional embodiment.

In the optional embodiment, the air conditioner includes the wind power device 1 described in any one of the aforementioned optional embodiments, and further includes a signal receiving device 60 for receiving a control signal. When the signal receiving device 60 receives a standby or shutdown signal, the signal receiving device is powered by the storage battery 50 of the wind power device or alternating current power supply on a side of a power grid 70, components of the air conditioner that need to be kept activated in the standby or shutdown state are also powered by the storage battery 50 of the wind power device or the alternating current power supply on the side of the power grid 70, and the power supply of other components of the air conditioner is disconnected. In the optional embodiment, the air conditioner further includes a second power transformation circuit 45 for converting alternating current voltage on the side of the power grid 70 or direct current voltage of the storage battery 50 into power supply voltage of the signal receiving device 60 or a keeping activated component 66.

According to the above-mentioned optional embodiment, the wind power device of the air conditioner can convert wind energy into electric energy and store the electric energy in the storage battery; when the air conditioner is in the standby or shutdown state, the power supply of the signal receiving device and the components that need to be kept activated is disconnected from the side of the power grid, and the electric energy stored in the storage battery is used to keep the signal receiving device and some components always in an active state, while the power supply of other components of the air conditioner is disconnected. The power consumption of the air conditioner in the standby or shutdown state is the electric energy stored in the storage battery, and power consumption components only include the signal receiving device and components that must be kept activated, and other components of the air conditioner are in a power-off state. Since the electric energy in the storage battery is converted by the wind energy output by the fan of the outer unit of the air conditioner, the power consumption of the air conditioner in the standby or shutdown state is 0.

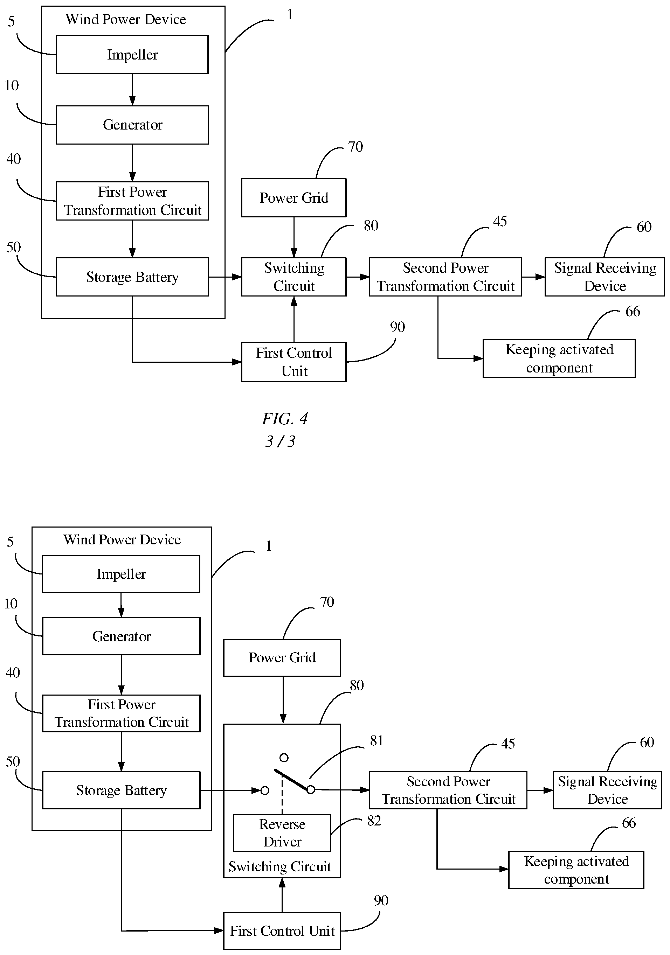

Fig. 4 shows an air conditioner according to another optional embodiment.

In the optional embodiment, the air conditioner further includes a first control unit 90 configured to detect whether a remaining capacity of the storage battery is greater than or equal to a first threshold value when a standby or shutdown signal is received by the signal receiving device; if the remaining capacity of the storage battery is greater than or equal to the first threshold value, control a switching circuit 80 to select the storage battery 50 to supply power to the signal receiving device 60 and the keeping activated component 66; and if the remaining capacity of the storage battery is less than the first threshold value, control the switching circuit to select alternating current power supply on a side of the power grid 70 to supply power to the signal receiving device 60 and the keeping activated component 66. Optionally, the first threshold value is 20% of a total capacity of the storage battery.

Optionally, when the air conditioner is in the standby or shutdown state and the signal receiving device and components that need to be kept activated are powered by the storage battery, the first control unit detects the remaining capacity of the storage battery at a regular time interval. According to the optional embodiment, when the air conditioner is in the standby or shutdown state, the remaining capacity of the storage battery can be effectively monitored, which can prevent the signal receiving device from being unable to receive a power-on signal due to the exhaustion of the remaining capacity of the storage battery, and prevent the components that need to be kept activated from being unable to run in time when the power-on signal arrives due to power failure.

Optionally, when the remaining capacity of the storage battery meets a first preset condition, the first control unit detects the remaining capacity of the storage battery at a first time interval. Optionally, the first preset condition is that the remaining capacity of the storage battery is greater than or equal to 70% of the total capacity of the storage battery. Optionally, the first time interval is 1 to 2 hours.

Optionally, when the remaining capacity of the storage battery meets a second preset condition, the first control unit detects the remaining capacity of the storage battery at a second time interval. Optionally, the second preset condition is that the remaining capacity of the storage battery is greater than or equal to 50 to 60% of the total capacity of the storage battery. Optionally, the second time interval is 0.5 to 1 hour.

Optionally, when the remaining capacity of the storage battery meets a third preset condition, the first control unit detects the remaining capacity of the storage battery at a third time interval. Optionally, the third preset condition is that the remaining capacity of the storage battery is greater than or equal to 40 to 50% of the total capacity of the storage battery. Optionally, the third time interval is 10 to 20 minutes.

Optionally, when the remaining capacity of the storage battery meets a fourth preset condition, the first control unit detects the remaining capacity of the storage battery at a fourth time interval. Optionally, the fourth preset condition is that the remaining capacity of the storage battery is greater than or equal to 30 to 40% of the total capacity of the storage battery. Optionally, the fourth time interval is 5 to 10 minutes.

Optionally, when the remaining capacity of the storage battery meets a fifth preset condition, the first control unit detects the remaining capacity of the storage battery at a fifth time interval. Optionally, the fifth preset condition is that the remaining capacity of the storage battery is greater than or equal to 20 to 30% of the total capacity of the storage battery. Optionally, the fifth time interval is 1 to 2 minutes.

Optionally, when the remaining capacity of the storage battery meets a sixth preset condition, the first control unit detects the remaining capacity of the storage battery at a sixth time interval. Optionally, the sixth preset condition is that the remaining capacity of the storage battery is greater than or equal to 10 to 20% of the total capacity of the storage battery. Optionally, the sixth time interval is 1 minute.

Optionally, when the remaining capacity of the storage battery meets a seventh preset condition, the first control unit controls the switching circuit to select the alternating current power supply on the side of the power grid. Optionally, the seventh preset condition is that the remaining capacity of the storage battery is 5 to 10% of the total capacity of the storage battery.

Fig. 5 shows an air conditioner according to another optional embodiment.

In the optional embodiment, the switching circuit 80 includes a reverse driver 82 and a relay 81 and is configured to switch between a power supply line of the storage battery and a power supply line on the side of the power grid. After receiving the standby or shutdown signal, the signal receiving device 60 outputs a control signal to the first control unit. The first control unit controls an output signal of the reverse driver 82 according to the remaining capacity of the storage battery 50, and the relay 81 is controlled by the output signal of the reverse driver 82 to operate to switch between the power supply line on the side of the power grid and the power supply line of the storage battery.

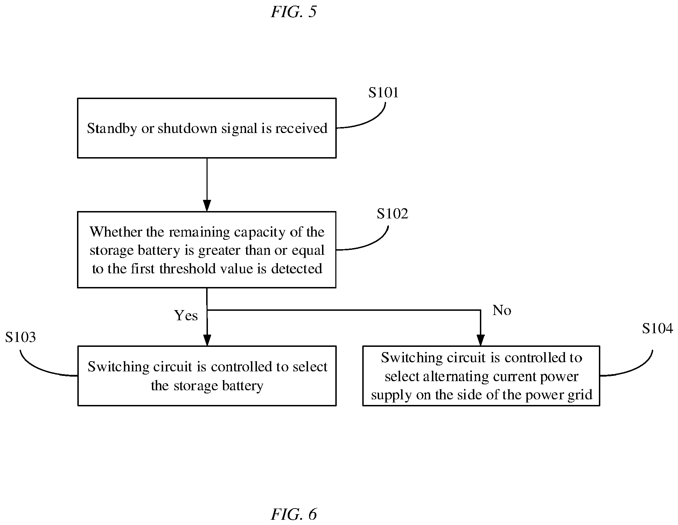

Fig. 6 shows a control method according to an optional embodiment.

In the optional embodiment, the control method is used to control the air conditioner described in any one of the aforementioned embodiments. The method includes: step 101, the standby or shutdown signal is received; step 102, whether the remaining capacity of the storage battery is greater than or equal to the first threshold value is detected; step 103, if the remaining capacity of the storage battery is greater than or equal to the first threshold value, the switching circuit is controlled to select the storage battery to supply power to the signal receiving device and the keeping activated component when the air conditioner is in the standby or shutdown state; step 104, if the remaining capacity of the storage battery is less than the first threshold value, the switching circuit is controlled to select alternating current power supply on the side of the power grid to supply the power to the signal receiving device and the keeping activated component when the air conditioner is in the standby or shutdown state. Optionally, the first threshold value is 20% of a total capacity of the storage battery.

Optionally, the method further includes: when the air conditioner is in the standby or shutdown state and the signal receiving device and components that need to be kept activated are powered by the storage battery, the remaining capacity of the storage battery is detected at a regular time interval. According to the optional embodiment, when the air conditioner is in the shutdown state, the remaining capacity of the storage battery can be effectively monitored, which can prevent the signal receiving device from being unable to receive a power-on signal due to the exhaustion of the remaining capacity of the storage battery, and prevent the components that need to be kept activated from being unable to run in time when the power-on signal arrives due to power failure.

Optionally, the method further includes: when the remaining capacity of the storage battery meets a first preset condition, the remaining capacity of the storage battery is detected at a first time interval. Optionally, the first preset condition is that the remaining capacity of the storage battery is greater than or equal to 70% of the total capacity of the storage battery. Optionally, the first time interval is 1 to 2 hours.

Optionally, the method further includes: when the remaining capacity of the storage battery meets a second preset condition, the remaining capacity of the storage battery is detected at a second time interval. Optionally, the second preset condition is that the remaining capacity of the storage battery is greater than or equal to 50 to 60% of the total capacity of the storage battery. Optionally, the second time interval is 0.5 to 1 hour.

Optionally, the method further includes: when the remaining capacity of the storage battery meets a third preset condition, the remaining capacity of the storage battery is detected at a third time interval. Optionally, the third preset condition is that the remaining capacity of the storage battery is greater than or equal to 40 to 50% of the total capacity of the storage battery. Optionally, the third time interval is 10 to 20 minutes.

Optionally, the method further includes: when the remaining capacity of the storage battery meets a fourth preset condition, the remaining capacity of the storage battery is detected at a fourth time interval. Optionally, the fourth preset condition is that the remaining capacity of the storage battery is greater than or equal to 30 to 40% of the total capacity of the storage battery. Optionally, the fourth time interval is 5 to 10 minutes.

Optionally, the method further includes: when the remaining capacity of the storage battery meets a fifth preset condition, the remaining capacity of the storage battery is detected at a fifth time interval. Optionally, the fifth preset condition is that the remaining capacity of the storage battery is greater than or equal to 20 to 30% of the total capacity of the storage battery. Optionally, the fifth time interval is 1 to 2 minutes.

Optionally, the method further includes: when the remaining capacity of the storage battery meets a sixth preset condition, the remaining capacity of the storage battery is detected at a sixth time interval. Optionally, the sixth preset condition is that the remaining capacity of the storage battery is greater than or equal to 10 to 20% of the total capacity of the storage battery. Optionally, the sixth time interval is 1 minute.

Optionally, the method further includes: when the remaining capacity of the storage battery meets a seventh preset condition, the switching circuit is controlled to select the alternating current power supply on the side of the power grid. Optionally, the seventh preset condition is that the remaining capacity of the storage battery is 5 to 10% of the total capacity of the storage battery.

In some optional embodiments, there is provided a computer readable storage medium having a computer program stored thereon, when the computer program is executed by a processor, the aforementioned method is implemented. The above-mentioned computer readable storage medium includes ROM (Read Only Memory), RAM (Random Access Memory), magnetic tape, optical storage device, and the like.

A person skilled in the art may recognize that the elements and algorithm steps of the examples described in the embodiments disclosed herein may be implemented by electronic hardware, or a combination of computer software and electronic hardware. Whether these functions are implemented by hardware or software depends on the specific application and design constraints of the technical solutions. A person skilled may use different methods to implement the described functions for each specific application, but such implementation should not be considered beyond the scope of the embodiments of the present disclosure. A person skilled may clearly understand that for convenience and conciseness of description, the specific work processes of the above-mentioned systems, devices and units may refer to corresponding processes in the above-mentioned method embodiments and will not be repeated herein. It should be understood that, the present disclosure is not limited to the flowchart and structures described above and shown in the accompanying drawings, and various modifications and changes may be made without departing from the scope. The scope of the present disclosure is limited only by the appended claims.

## Claims

1. A wind power device, **characterized in that**, comprising at least one impeller, a generator, a first power transformation circuit and a storage battery, wherein

the at least one impeller is installed in front of an air outlet grid of an outer unit of an air conditioner and is connected to a rotating shaft of the generator;

the first power transformation circuit receives alternating current electric energy output by the generator and converts the alternating current electric energy into a charging voltage of the storage battery; and

the storage battery stores direct current electric energy output by the first power transformation circuit.

2. The wind power device according to claim 1, **characterized in that**, a rotating shaft of the at least one impeller and a rotating shaft of a fan of the outer unit of the air conditioner are in the same horizontal line.

3. The wind power device according to claim 1, **characterized in that**, the at least one impeller comprises a plurality of impellers, and each impeller is arranged around a fan of the outer unit of the air conditioner.

4. An air conditioner, **characterized in that**, comprising the wind power device according to any one of claims 1 to 3, and further comprising a signal receiving device configured to receive a control signal, wherein the signal receiving device is powered by the storage battery or a power grid, and a keeping activated component is also powered by the storage battery or the power grid when the air conditioner is in a standby or shutdown state.

5. The air conditioner according to claim 4, **characterized in that**, further comprising a first control unit configured to detect whether a remaining capacity of the storage battery is greater than or equal to a first threshold value when a standby or shutdown signal is received by the signal receiving device; if the remaining capacity of the storage battery is greater than or equal to the first threshold value, control a switching circuit to select the storage battery to supply power to the signal receiving device and the keeping activated component, and control power supply of other components of the air conditioner to be disconnected; and if the remaining capacity of the storage battery is less than the first threshold value, control the switching circuit to select alternating current power supply on a side of the power grid to supply power to the signal receiving device and the keeping activated component, and control the power supply of other components of the air conditioner to be disconnected.

6. The air conditioner according to claim 5, **characterized in that**, the first control unit detects the remaining capacity of the storage battery at a regular time interval when the air conditioner is in the standby or shutdown state and power is supplied from the storage battery.

7. A control method for controlling the air conditioner according to any one of claims 4 to 6, **characterized in that**, comprising: when the standby or shutdown signal is received, detecting whether the remaining capacity of the storage battery is greater than or equal to the first threshold value;

if the remaining capacity of the storage battery is greater than or equal to the first threshold value, controlling the switching circuit to select the storage battery to supply power to the signal receiving device and the keeping activated component, and controlling power supply of other components of the air conditioner to be disconnected; and

if the remaining capacity of the storage battery is less than the first threshold value, controlling the switching circuit to select the alternating current power supply on a side of the power grid to supply the power to the signal receiving device and the keeping activated component, and controlling the power supply of other components of the air conditioner to be disconnected.

8. The control method according to claim 7, **characterized in that**, further comprising: detecting the remaining capacity of the storage battery at the regular time interval when the air conditioner is in the standby or shutdown state and power is supplied from the storage battery.

9. The control method according to claim 8, **characterized in that**, further comprising: detecting the remaining capacity of the storage battery at a first time interval when the remaining capacity of the storage battery meets a first preset condition.

10. A computer readable storage medium having a computer program stored thereon, **characterized in that**, the computer program is executed by a processor, the control method according to any one of claims 7 to 9 is implemented.

FIG. 1

FIG. 2

*FIG. 3*

Wind Power Device

5 — Impeller

10 — Generator

40 — First Power Transformation Circuit

50 — Storage Battery

1

70 — Power Grid

80 — Switching Circuit

45 — Second Power Transformation Circuit

60 — Signal Receiving Device

66 — Keeping activated component

90 — First Control Unit

*FIG. 4*

*3 / 3*

Wind Power Device

5 — Impeller

10 — Generator

40 — First Power Transformation Circuit

50 — Storage Battery

1

70 — Power Grid

80 — Switching Circuit

81

82 — Reverse Driver

45 — Second Power Transformation Circuit

60 — Signal Receiving Device

66 — Keeping activated component

90 — First Control Unit

FIG. 5

```
                                              S101
┌─────────────────────────────────────┐    ╱
│  Standby or shutdown signal is received │──╱
└─────────────────────────────────────┘
                  │
                  ▼
                                              S102
┌─────────────────────────────────────┐    ╱
│  Whether the remaining capacity of the │──╱
│  storage battery is greater than or equal │
│  to the first threshold value is detected │
└─────────────────────────────────────┘
                  │
       Yes ┌──────┴──────────────────┐ No
           ▼                         ▼
┌─────────────────────────┐  ┌─────────────────────────┐
│ Switching circuit is    │  │ Switching circuit is    │
│ controlled to select    │  │ controlled to select    │
│ the storage battery     │  │ alternating current power│
│                         │  │ supply on the side of the│
│                         │  │ power grid              │
└─────────────────────────┘  └─────────────────────────┘
   S103                          S104
```

FIG. 6

## INTERNATIONAL SEARCH REPORT

| International application No. |
| --- |
| **PCT/CN2018/117453** |

**A.    CLASSIFICATION OF SUBJECT MATTER**

F24F 5/00(2006.01)i;  F03D 9/00(2016.01)i;  F03G 7/00(2006.01)i

According to International Patent Classification (IPC) or to both national classification and IPC

**B.    FIELDS SEARCHED**

Minimum documentation searched (classification system followed by classification symbols)

F24F, F03D, F03G

Documentation searched other than minimum documentation to the extent that such documents are included in the fields searched

Electronic data base consulted during the international search (name of data base and, where practicable, search terms used)

CNABS, CNTXT, CNKI, DWPI, VEN: 空调, 空气调节, 风电, 发电, 叶轮, 变电, 变换, 转换, AC, DC, 电池, 充电, 直流, 交流, 方法, 电量, 检测, air, conditioning, wind, power, electric, generator, impeller, convert, battery, charg+, current, method, capacity, detect+

**C.    DOCUMENTS CONSIDERED TO BE RELEVANT**

| Category* | Citation of document, with indication, where appropriate, of the relevant passages | Relevant to claim No. |
| --- | --- | --- |
| X | CN 102518563 A (ZHEJIANG UNIVERSITY) 27 June 2012 (2012-06-27)<br>    description, paragraphs [0003]-[0022], and figures 1 and 2 | 1-4 |
| Y | CN 102518563 A (ZHEJIANG UNIVERSITY) 27 June 2012 (2012-06-27)<br>    description, paragraphs [0003]-[0022], and figures 1 and 2 | 5-10 |
| Y | CN 104242369 A (HUNAN XINCHENG NEW ENERGY INSTITUTE ET AL.) 24 December 2014 (2014-12-24)<br>    description, paragraphs [0011]-[0019], and figures 1 and 2 | 5-10 |
| A | CN 101127446 A (CHEN, SHIYU ET AL.) 20 February 2008 (2008-02-20)<br>    entire document | 1-10 |
| A | CN 105650763 A (GREE ELECTRIC APPLIANCES INC. OF ZHUHAI) 08 June 2016 (2016-06-08)<br>    entire document | 1-10 |
| A | CN 104654643 A (GREE ELECTRIC APPLIANCES INC. OF ZHUHAI) 27 May 2015 (2015-05-27)<br>    entire document | 1-10 |

☑ Further documents are listed in the continuation of Box C.     ☑ See patent family annex.

| | | |
| --- | --- | --- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **01 April 2019** | **08 April 2019** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088**<br>**China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2018/117453** |

### C.    DOCUMENTS CONSIDERED TO BE RELEVANT

| Category* | Citation of document, with indication, where appropriate, of the relevant passages | Relevant to claim No. |
| --- | --- | --- |
| A | CN 103234621 A (GUODIAN UNITED POWER TECHNOLOGY CO., LTD.) 07 August 2013 (2013-08-07)<br>     entire document | 1-10 |
| A | US 2011140511 A1 (LARSEN EINAR VAUGHN) 16 June 2011 (2011-06-16)<br>     entire document | 1-10 |
| A | EP 2565443 A1 (XEMC DARWIND BV) 06 March 2013 (2013-03-06)<br>     entire document | 1-10 |

Form PCT/ISA/210 (second sheet) (January 2015)

## INTERNATIONAL SEARCH REPORT
### Information on patent family members

International application No.

**PCT/CN2018/117453**

| Patent document cited in search report | | | Publication date (day/month/year) | Patent family member(s) | | | Publication date (day/month/year) |
|---|---|---|---|---|---|---|---|
| CN | 102518563 | A | 27 June 2012 | CN | 102518563 | B | 15 January 2014 |
| CN | 104242369 | A | 24 December 2014 | None | | | |
| CN | 101127446 | A | 20 February 2008 | None | | | |
| CN | 105650763 | A | 08 June 2016 | None | | | |
| CN | 104654643 | A | 27 May 2015 | WO | 2016119450 | A1 | 04 August 2016 |
| | | | | CN | 104654643 | B | 25 December 2018 |
| CN | 103234621 | A | 07 August 2013 | None | | | |
| US | 2011140511 | A1 | 16 June 2011 | EP | 2445075 | B1 | 05 September 2018 |
| | | | | CN | 102570494 | B | 03 February 2016 |
| | | | | CN | 102570494 | A | 11 July 2012 |
| | | | | US | 8120202 | B2 | 21 February 2012 |
| | | | | EP | 2445075 | A3 | 20 September 2017 |
| | | | | EP | 2445075 | A2 | 25 April 2012 |
| | | | | DK | 2445075 | T3 | 15 October 2018 |
| EP | 2565443 | A1 | 06 March 2013 | CN | 103890385 | B | 16 January 2018 |
| | | | | US | 2014225369 | A1 | 14 August 2014 |
| | | | | WO | 2013034610 | A2 | 14 March 2013 |
| | | | | CN | 103890385 | A | 25 June 2014 |
| | | | | EP | 2753825 | A2 | 16 July 2014 |
| | | | | WO | 2013034610 | A3 | 30 May 2013 |
| | | | | US | 9698715 | B2 | 04 July 2017 |
| | | | | CA | 2847518 | A1 | 14 March 2013 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810761252